# EUROPEAN PATENT APPLICATION

(11) **EP 4 645 060 A1**
(43) Date of publication of application: **05.11.2025**
(21) Application number: 24173535.6
(22) Date of filing: 30.04.2024
(51) Int. Cl.: G06F 3/12, H04N 1/00

(54) **A PRINTER FOR PRINTING PRINT JOBS ON PRINT MEDIA AND A METHOD THEREFOR**

(71) Applicant: Canon Production Printing Holding B.V., 5914 HH Venlo (NL)
(72) Inventor: VAN KNIPPENBERG, René M.D., Venlo (NL); KROES, Arjan, Venlo (NL)
(74) Representative: Canon Production Printing IP Department

(57) **Abstract**

A method and a printer for printing print jobs on print media, the printer comprising at least one print media source, a print controller for controlling the printing of the print jobs by means of a print job queue, and a user interface for displaying a representation list of the print jobs in the print job queue. The representation list comprises a visual element which is present at each scheduled print job in the representation list, is configured to signal a status of each print job and to display which print jobs end up to a same output unit of print media.

## Description

### BACKGROUND OF THE INVENTION

### 1. Field of the invention

The present invention relates to a printer for printing print jobs on print media, the printer comprising at least one print media source, a print controller for controlling the printing of the print jobs by means of a print job queue, and a user interface for displaying a representation list of the print jobs in the print job queue. The at least one print media source may be a tray or a pallet to be loaded with cut sheets of print media, or a roll holder to be loaded with a roll of print media.

### 2. Description of Background Art

Operators in a high velocity industrial environment working with multi-media printers have a daily challenge to keep the engines running. One crucial aspect in this keep-running challenge is providing the printer with the right amount and right kind of media in time. For managing this, the operator can use an input schedule in a digital front end to see upcoming media requests. However, the input schedule does not present which print jobs can be printed based on the current media available in the engine. To present said print jobs a manual calculation needs to be performed and requires significant cognitive load.

Besides the media concerns, organizing the print jobs in the print job queue is a conscious task for both cut sheet printers and roll to roll printers. For the cut sheet printers having a stack production, it is important for the operator to see which jobs end up to the same stack. For a roll-to-roll printer it is important to see if a print job would fit on the current input roll or how much length is left on the roll.

According to the prior art an input schedule for cut sheet printers may comprise a vertical list of the loaded and required print media and on the end a list of the output stackers. Attached to each of these print media items may be a timeline, indicating when the print media is used and for how long, when the sum of the media is almost running out, and when the media will run out. The goal of the operator is to keep the engine running for as long as possible. The operator has to focus on different parts of the user interface window displaying the input schedule making it cumbersome to have a complete overview. A required number of print media is not visible in this input schedule and must be separately calculated/estimated by the operator himself in a different screen. The operator needs to see in another panel which print media is in which tray and therewith determine where to put the print media.

### SUMMARY OF THE INVENTION

It is an object of the invention to provide a printer and a method which supports the operator by providing information about print media handling for operators and job management for in the print job queue.

In accordance with the present invention, the representation list of the print jobs in the print job queue comprises a visual element which is present at each scheduled print job in the representation list and is configured to signal a status of each print job and to display which print jobs end up to a same output unit of print media.

The output unit of print media is regarded to be a measuring unit of print media output of the printer. For example, the output unit of print media is an output stack of printed sheets of print media or a printed output roll.

By means of the visual element the operator can see which print jobs end up to the same stack or to the same roll, how the print jobs end up on the stack (bottom versus top), and whether a print job will fit to the stack or to the roll and in case of a roll to roll printer how much length is left on the roll.

The visual element is present in every print job in the print job queue and signals a status. The visual element may signal by colour whether the media is available in the printer, even after printing the previous print jobs, and which print jobs are connected visually and end-up to the same output stack or roll. The visual element results in a chain-like representation.

The visual element is part of the print job queue. The visual element displays which print jobs are connected to the same output stack or output roll. Therefore the visual element supports a visual interpretation of the print job queue for stack-production printers or roll-to-roll printers as the print jobs get connected visually. Therefore, the operator is more likely to interpret easier which print jobs belong to the same out stack or output roll.

The visual element also contains a status and therefore signals the availability of print media. Unlike the known input schedule the visual element explains until which print job the printer can print with the current media available. By means of said signaling, the operator can now easily see which print jobs are ready to be printed and before which print job the operator needs to fulfil a media request.

Thereby, the object of the present invention has been achieved.

More specific optional features of the invention are indicated in the dependent claims.

According to an embodiment the visual element comprises at least one chain representation along the print jobs in the representation list. Each chain component represents a different output unit of print media, i.e. an output stack of print media or an output roll of print media.

According to an embodiment the signaled status comprises an indication of the availability of the print media intended to be used by the corresponding print jobs. The signaled status may be formed by at least one colour of the visual element.

According to an embodiment an end piece of the at least one chain representation displays until which print job the printer is able to print with the output unit of print media available for the print jobs displayed along the at least one chain representation.

According to an embodiment the visual element is a concatenation of representations of output units and at an end of each concatenation of representations of output units an additional symbol is present that indicates the end of the concatenation and displays how the end of an output unit transitions to the start of a subsequent output unit.

According to an embodiment the printer is a roll-to-roll printer and the output unit of print media is an output roll of print media.

According to an embodiment the printer is a cut sheet printer and the output unit of print media is an output stack of print media.

The present invention also relates to a method for scheduling output units of print media in a print job queue of a printer according to any of the preceding claims, wherein the method comprises the steps of
- receiving print jobs in the print queue of the printer,
- automatically detecting an amount of print media available in the at least one print media source of the printer,
- attributing print jobs in the print job queue to the available print media,
- displaying a representation list of the print jobs in the print queue on a user interface of the printer,
- displaying a visual element in the representation list, which visual element is present at each scheduled print job in the representation list,
- the visual element signaling a status of each print job, and
- the visual element displaying which print jobs end up to a same output unit of print media.

The present invention also relates to a computer program product, including computer readable code embodied on a computer readable medium, said computer readable code comprising instructions for executing the steps of a method according to the present invention on a printer according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
- Fig. 1-4: are user interface screens of a user interface of a printer according to the present invention;
- Fig. 5: is a flow diagram of a method according to the present invention; and
- Fig. 6: is a schematic diagram of a computer readable medium according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

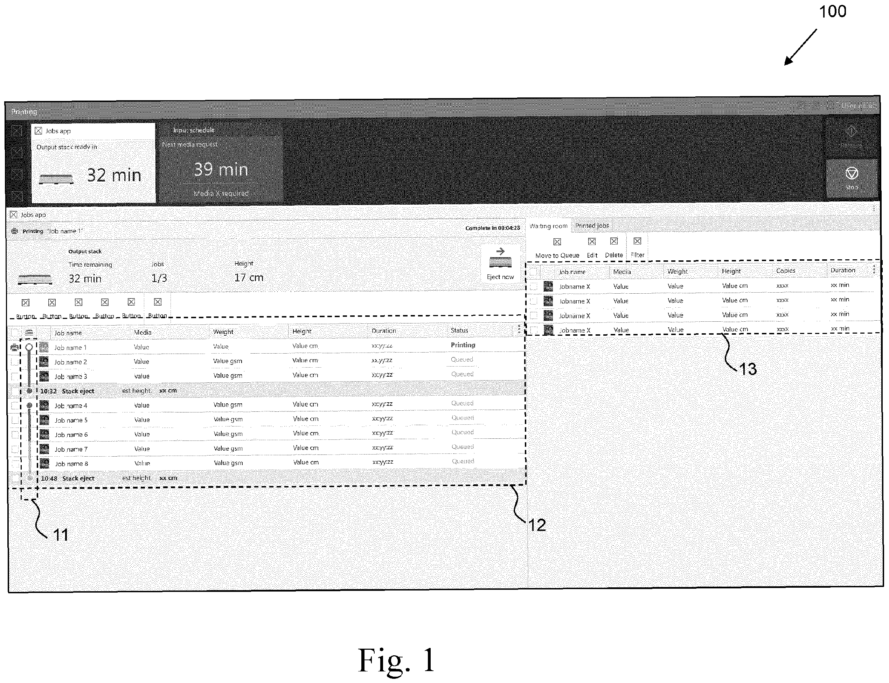

Fig. 1 shows a user interface screen 100 according to the present invention. The user interface screen 100 is presented to the operator at a user interface of the printer according to the present invention.

At the left side of the user interface screen 100 the print job queue 12 is visualized as a list of print jobs scheduled to be printed by the printer. At the right may be a waiting room 13 which comprises print jobs received from the users but which are not yet scheduled for printing. The representation list of the print job queue comprises a number of columns with print job properties. The representation list of the print job queue also comprises the visual element 11 according to the present invention.

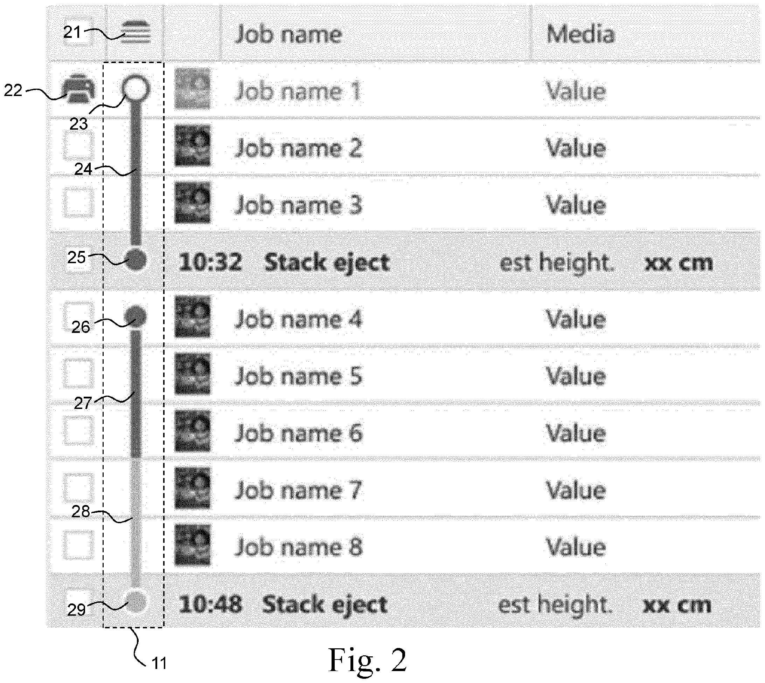

Fig. 2 shows the visual element 11 which is surrounded by a dashed rectangle in more detail. A header 21 for the visual element 11 is provided on top to indicate the kind of output which will be generated, i.e. a stack of sheets of a printed roll.

The visual element 11 extends along the print jobs 1 - 8 in the print job queue represented in the representation list. Thus the visual element 11 is an illustrative item in every print job (list item) in the print job queue. Having the visual element 11 present in every print job creates one or multiple chains within the print job queue. There are various states of this visual element. There are, dots, (dotted) lines, and linking symbols which will be separately described hereinafter.

The dots 23, 25, 26, 29 represent an event. An open dot 23 illustrates an active event, in the most cases that a print job is being printed. A closed dot 25, 26, 29 represents an upcoming event, for example a stack eject, planned stop, or a media request.

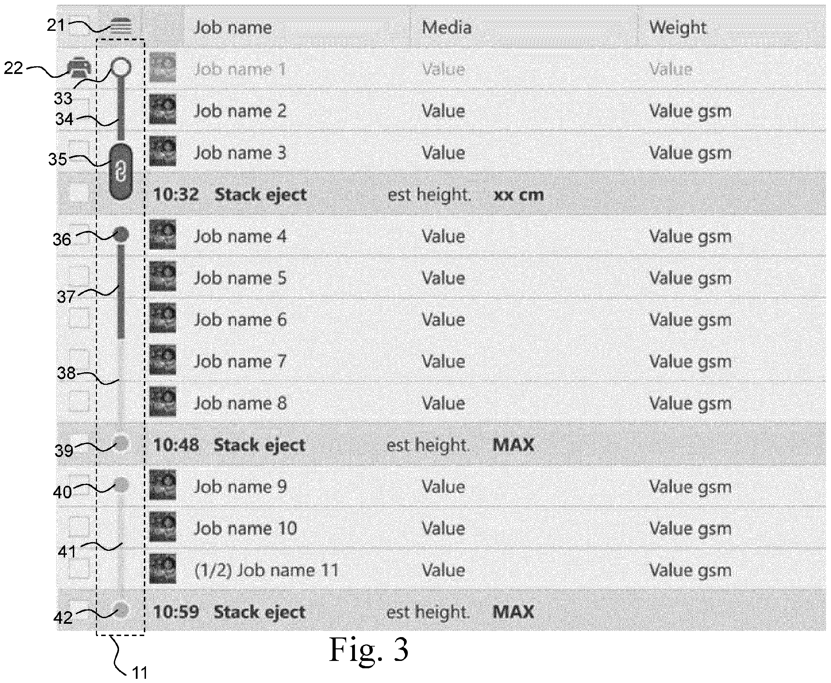

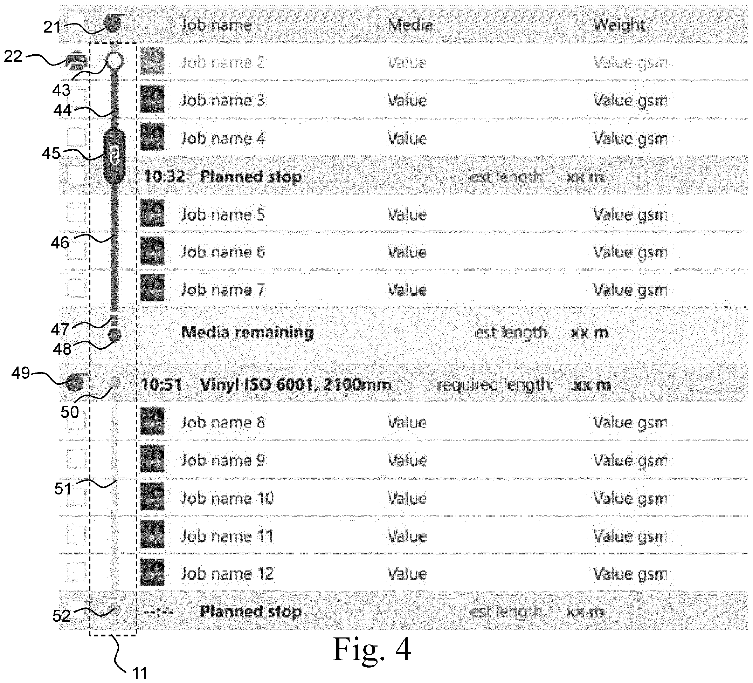

A solid line 24, 27, 28 only indicates by colour its state. For example a blue colour indicates that it is possible to print the job (lines 24, 27) and a gray colour indicates that it is not possible to print the print job due to the current available print media or that an earlier print job would stop the print job queue due to lacking print media (line 28). For example, using Fig. 3 as an example, it could be that print job 'Job name 10' could be printed based on the available print media. However, the printer first requires print media for print job 'Job name 7' to continue. There may also be also a dotted stripe displayed which indicates a certain level of possibility and uncertainty (See Fig. 4). In the context of a cut sheet printer it is uncertain whether the operator fulfills the print media request in time and therefore continuation of the line of the visual element 11. In the context of a roll to roll printer a dotted stripe symbolizes an opportunity to plan more print jobs on the current input roll.

The linking symbols 35 (See Fig. 3), 45 (See Fig. 4) represent that a print job is linked to an event. This link can be inserted manually by the operator or is included in the print job ticket itself (e.g., a stack eject after printing this print job).

By means of the visual element 11 the operator can see that print jobs 1 - 3, respectively print jobs 4 - 8 end up to the same stack, how the print jobs end up on the stack (bottom vs top), and whether a print job will fit to the stack.

Fig. 3 shows an example of the visual element 11 in case of a cut sheet printer. In this example the print job 'Job name 1' is being printed as indicated by a printer symbol 22 and the open dot 33. The print job 'Job name 3' has a linked stack eject which is indicated by linking symbol 35. After the print job 'Job name 6' there is a print media request as this line 37 does not continue in blue, but continues in a gray line 38. After the print job 'Job name 8' there is a stack eject 39 due to the physical limitation of the stack height. A similar stack eject object 42 is there after print job `(1/2) Job name 11'. It is noteworthy that the print job `(1/2) Job name 11' has been split into two parts due to the maximum stack height.

Fig. 4 shows an example of the visual element 11 in case of a roll to roll printer. The kind of output is indicated by a roll symbol 21. In this example the print job 'Job name 2' is being printed as indicated by a printer symbol 22 and the open dot 43. The visual element 11 indicates with the line above the open dot 43 that one or more previous print jobs have been printed already. The print job 'Job name 4' has a linked 'Planned stop' as indicated by the linking symbol 45. After print job 'Job name 7' there is an indication that there is media remaining of the input roll as indicated by the dotted line 47. After the 'Media remaining' indicated by the dotted line 47 there is a print media request for the next print jobs as indicated by the gray dot 50 and gray line 51. After print job 'Job name 12' there is a planned stop which is not linked to any job and which is indicated by the gray dot 52.

By means of the visual element 11 the operator can see that print jobs 2 - 7 end up to the same roll, how the print jobs end up on the roll, and whether a print job will fit to the roll and how much length is left on the roll.

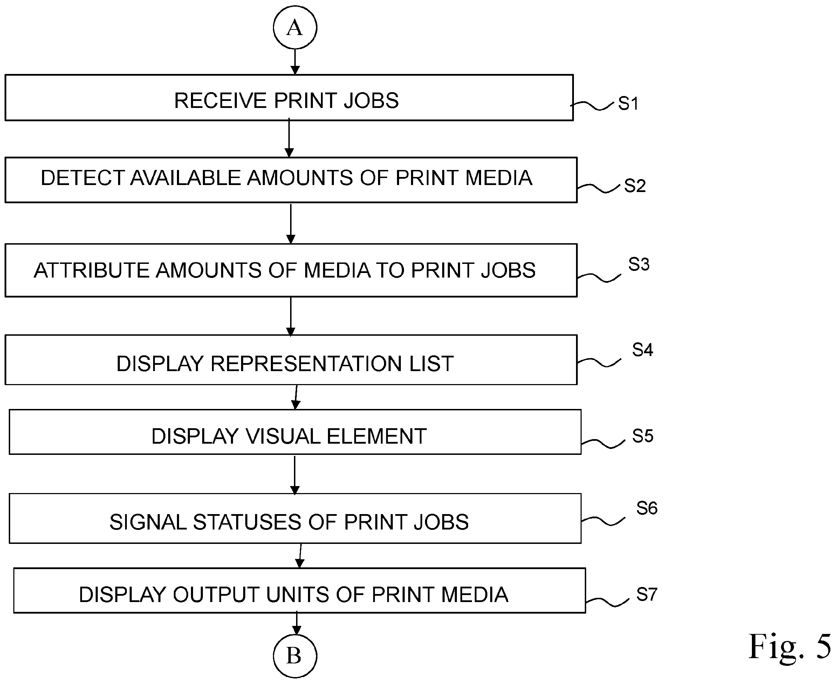

Fig. 5 is a flow diagram of the method for scheduling output units of print media in a print job queue of a printer according to to the present invention. The method starts in a starting point A which leads to a first step S1.

In the first step S1 print jobs are received in the print queue of the printer.

In a second step S2 an amount of print media is detected which is available in the at least one print media source of the printer.

In a third step S3 print jobs in the print job queue are attributed to the available print media.

In a fourth step S4 a representation list of the print jobs in the print queue is displayed on a user interface of the printer.

In a fifth step S5 the visual element is displayed in the representation list. The visual element is present at each scheduled print job in the representation list. Before display of the visual element, the visual element is constructed by the print controller while taking into account the available print media, the print media attributed to each print job, the maximum stack height of to be printed stacks or the length of the input roll, a print mode of the printer, the resulting print velocity of the printer, if the print media for a print job is onboarded or not, and the status of the printer. If the print media for a certain print job is not onboarded, the print job cannot be printed and the visual element will show this, for example by its colour. The visual element may be constructed as a software component which is a software building block to be placed on a user interface screen of the print controller or any other computing device displaying the representation list of the print job queue. Both a local user interface of the printer as well as a remote managing tool installed on a computer may comprise the print job queue including the visual element according to the present invention.

In a sixth step S6 the visual element signals a status of each print job. The signaled status of the print job may be expressed in the colour of the part of the visual element corresponding to the print job and refers to the availability of print media for the planned print job.

In a seventh step S7 the visual element is displaying which print jobs end up to a same output unit of print media. The visual element extends along the print jobs that end up to the same output unit of print media.

The method ends in an end point B.

The steps S5 - S7 are preferably performed in parallel.

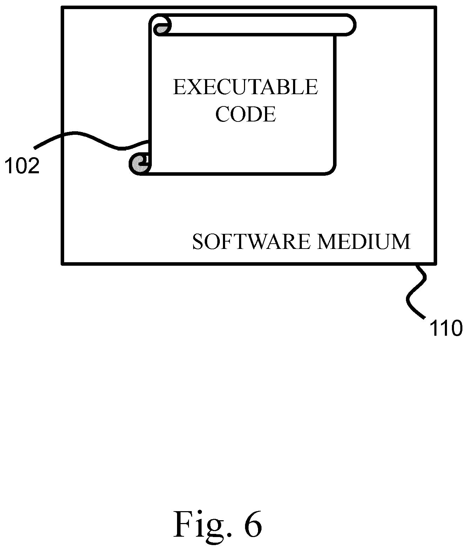

Fig. 6 schematically shows a non-transitory software medium 110 according to the invention. The software medium 110 comprises executable code 102 configured to, when executed, perform the method according to the invention, e.g. as described with respect to either the printer according to the present invention or the method shown in Fig. 5 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A printer for printing print jobs on print media, the printer comprising at least one print media source, a print controller for controlling the printing of the print jobs by means of a print job queue, and a user interface for displaying a representation list of the print jobs in the print job queue, wherein the representation list comprises a visual element which is present at each scheduled print job in the representation list and is configured to signal a status of each print job and to display which print jobs end up to a same output unit of print media.

2. A printer according to claim 1, wherein the visual element comprises at least one chain representation along the print jobs in the representation list.

3. A printer according to claim 1 or 2, wherein the signaled status comprises an indication of the availability of the print media intended to be used by the corresponding print jobs.

4. A printer according to claim 2, wherein an end piece of the at least one chain representation displays until which print job the printer is able to print with the output unit of print media available for the print jobs displayed along the at least one chain representation.

5. A printer according to any of the preceding claims, wherein the visual element is a concatenation of representations of output units and at an end of each concatenation of representations of output units an additional symbol is present that indicates the end of the concatenation and displays how the end of an output unit transitions to the start of a subsequent output unit.

6. A printer according to any of the preceding claims, wherein the printer is a roll-to-roll printer and the output unit of print media is an output roll of print media.

7. A printer according to any of claims 1 - 5, wherein the printer is a cut sheet printer and the output unit of print media is an output stack of print media.

8. A method for scheduling output units of print media in a print job queue of a printer according to any of the preceding claims, wherein the method comprises the steps of
- receiving print jobs in the print queue of the printer,
- automatically detecting an amount of print media available in the at least one print media source of the printer,
- attributing print jobs in the print job queue to the available print media,
- displaying a representation list of the print jobs in the print queue on a user interface of the printer,
- displaying a visual element in the representation list, which visual element is present at each scheduled print job in the representation list,
- the visual element signaling a status of each print job, and
- the visual element displaying which print jobs end up to a same output unit of print media.

9. A computer program product, including computer readable code embodied on a computer readable medium, said computer readable code comprising instructions for executing the steps of a method according to claim 8 on a print media source processing printer according to any one of the claims 1 - 7.
